# EUROPÄISCHE PATENTSCHRIFT

(11) **EP 1 733 842 B1**
(45) Veröffentlichungstag und Bekanntmachung des Hinweises auf die Patenterteilung: **29.08.2007**
(21) Anmeldenummer: 05012980.8
(22) Anmeldetag: 16.06.2005
(51) Int. Cl.: B23Q 39/04, B23P 13/02

(54) **Verfahren zur spanenden Innen- und Aussen-Bearbeitung eines rohrförmigen Werkstücks und Vertikal-Drehmaschine zur Durchführung des Verfahrens**
Method for processing inner and outer surfaces of a tubular workpiece and vertical turning machine for the implementation of this process
Procédé pour usinage intérieur et extérieur d'une pièce tubulaire et tour vertical pour la mise en oeuvre de ce procédé

(43) Veröffentlichungstag der Anmeldung: 20.12.2006
(73) Patentinhaber: Hessapp GmbH, 65232 Taunusstein (DE)
(72) Erfinder: Lange, Werner, 65597 Hünfelden (DE); Noß, Hans, 65307 Bad Schwalbach (DE); Kellert, Hans-Dieter, 65232 Taunusstein (DE)
(74) Vertreter: Rau, Manfred

(56) Entgegenhaltungen:
- EP-A- 1 226 899
- DE-A1- 3 337 198
- DE-A1- 4 316 166

## Beschreibung

Die Erfindung betrifft ein Verfahren zur spanenden Innen-Bearbeitung und Außen-Bearbeitung eines im Wesentlichen rohrförmigen, eine Mittelachse aufweisenden Werkstücks und eine Vertikal-Drehmaschine zur Durchführung eines solchen Verfahrens.

Rohrförmige Werkstücke, an deren Genauigkeit hohe Anforderungen gestellt werden, wie beispielsweise Laufbuchsen für Kolbenmotoren, werden auf Drehmaschinen innen und außen vorbearbeitet und auf Transferstraßen, also mittels mehrerer hintereinander angeordneter Drehmaschinen fertig bearbeitet. Der Aufwand hierfür ist sehr groß.

Weiterhin ist es bekannt, die Endbearbeitung oder Fertigbearbeitung derartiger Werkstücke auf Drehmaschinen durchzuführen, bei denen also das jeweilige Werkstück während der spanenden Bearbeitung drehend angetrieben wird. Hierbei können sich die Werkstücke auf Grund der an ihnen angreifenden Fliehkräfte und auf Grund des dynamischen Verhaltens der rotierenden Spannvorrichtungen verformen. Es ist daher notwendig, die Innenfläche des Werkstücks nach dem Drehen zu honen, um eine hohe Toleranzgenauigkeit der Bearbeitung der Innenfläche, beispielsweise im Bereich von ± 0,01 mm zu erreichen. Ein solcher Bearbeitungsvorgang erfordert zwei einspindlige Drehmaschinen und eine zwischengeschaltete Honmaschine.

Aus der DE 43 16 166 A1 ist eine Drehmaschine bekannt, die auf einem Maschinengestell eine in einer horizontalen x-Richtung verschiebbar geführte Spann- und Übergabe-Einrichtung aufweist, die eine vertikal in einer z-Richtung verschiebbare Spann-Vorrichtung zur drehbaren Aufnahme eines an seiner Unterseite zu bearbeitenden scheibenförmigen Werkstücks aufweist. Diese Drehmaschine weist weiterhin einen unterhalb des Verschiebewegs der Spann- und Übergabe-Einrichtung ortsfest am Maschinen-Gestell angebrachten Werkzeugträger auf, der mindestens ein in z-Richtung unverschiebbares Werkzeug zur spanenden Bearbeitung der Unterseite des Werkstücks aufweist. Am Maschinen-Gestell ist weiterhin eine in x-Richtung verschiebbar geführte Bearbeitungs- und Ausgabe-Einrichtung angeordnet, die einen in z-Richtung verschiebbaren Werkzeugträger für mindestens ein Schneid-Werkzeug aufweist. Weiterhin ist unterhalb des Verschiebewegs der Spann- und Übergabe-Einrichtung und unterhalb des Verschiebewegs der Bearbeitungs- und Ausgabe-Einrichtung ortsfest am Maschinen-Gestell eine Motor-Spindel-Einrichtung angeordnet, die eine drehantreibbare und in z-Richtung unverschiebbare Spann-Vorrichtung zur spannenden Halterung des Werkstücks an einer Außenfläche aufweist. Diese bekannte Vertikal-Drehmaschine ist nur zur Bearbeitung von scheibenförmigen Werkstücken, wie beispielsweise Bremsscheiben von Automobilen, geeignet; zur Bearbeitung von im Wesentlichen rohrförmigen Werkstücken, wie beispielsweise Laufbuchsen von Kolbenmotoren, ist sie nicht geeignet.

Der Erfindung liegt daher die Aufgabe zu Grunde, ein Verfahren der gattungsgemäßen Art und eine Vertikal-Drehmaschine anzugeben, wobei mit geringem Aufwand eine Bearbeitung im Wesentlichen rohrförmiger Werkstücke mit sehr hoher Bearbeitungsgenauigkeit erreichbar ist.

Diese Aufgabe wird bei einem Verfahren der gattungsgemäßen Art durch die Merkmale des Anspruches 1 gelöst. Zuerst erfolgt das Bearbeiten der Innenfläche des undrehbar an seiner Außenfläche gehaltenem Werkstücks. Da das Werkstück nicht gedreht wird, treten die sonst beim Drehen eines drehenden Werkstücks auftretenden geschilderten Ungenauigkeiten nicht auf. Das Werkstück wird anschließend an seiner exakt bearbeiteten Innenfläche spannend aufgenommen und gehalten und dann rotierend an seiner Außenfläche bearbeitet. Ein zwischengeschaltetes Honen der Innenfläche ist nicht notwendig. Nach Anspruch 2 kann zwischen der Bearbeitung der Innenfläche und der Bearbeitung der Außenfläche ein Vermessen der Innenfläche erfolgen, so dass ein Nachbearbeiten zu einem frühzeitigen Zeitpunkt möglich ist oder aber auch frühzeitig eventueller Ausschuss erkannt wird.

Die Ansprüche 3 und 4 geben vorteilhafte Weiterbildungen des Verfahrens wieder.

Die Lösung der Aufgabe erfolgt weiterhin durch eine Vertikal-Drehmaschine mit den Merkmalen des Anspruches 5. Die Ansprüche 6 bis 13 geben die vorteilhaften Weiterbildungen und Ausgestaltungen dieser Vertikal-Drehmaschine wieder.

Weitere Merkmale, Vorteile und Einzelheiten der Erfindung ergeben sich aus der nachfolgenden Beschreibung eines Ausführungsbeispiels an Hand der Zeichnung. Es zeigt:

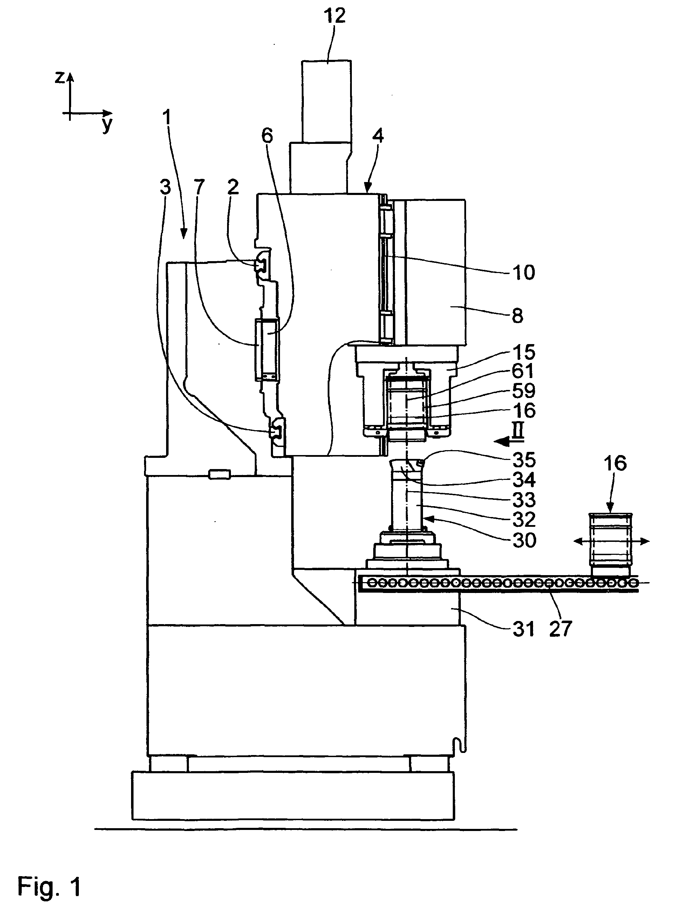

- Fig. 1: einen Querschnitt durch eine Vertikal-Drehmaschine nach der Erfindung gemäß dem Sichtpfeil I in Figur 2 und
- Fig. 2 bis 6: eine Frontansicht der Vertikal-Drehmaschine gemäß dem Sichtpfeil II in Figur 1 in verschiedenen Arbeitsstellungen.

Die in der Zeichnung dargestellte Vertikal-Drehmaschine weist ein Maschinen-Gestell 1 auf, an dessen oberem Bereich im vertikalen Abstand übereinander horizontal verlaufende Führungs-Schienen 2, 3 angebracht sind, auf denen ein erster Horizontal-Schlitten 4 und ein zweiter Horizontal-Schlitten 5 horizontal, also in x-Richtung verschiebbar gelagert sind. Der Horizontal-Antrieb der Schlitten 4, 5 erfolgt mittels Linearmotoren, deren Primärteil 6 am jeweiligen Schlitten 4 bzw. 5 angebracht ist. Der Sekundärteil 7 ist am Maschinen-Gestell 1 zwischen den Führungs-Schienen 2, 3 angebracht und besteht in üblicher Weise aus Permanent-Magneten. Jeder Schlitten 4, 5 kann also über fast die volle Länge der Führungs-Schienen 2, 3 in x-Richtung verfahren werden.

Auf jedem Horizontal-Schlitten 4 bzw. 5 ist ein vertikal in z-Richtung verschiebbarer erster bzw. zweiter Vertikal-Schlitten 8 bzw. 9 auf jeweils auf einem Paar Führungsschienen 10, 11 verschiebbar angeordnet. Die Vertikal-Verschiebung in z-Richtung erfolgt jeweils mittels eines z-Motors 12 bzw. 13 über einen Spindel-Trieb 14. Durch die Verfahrbarkeit in x- und z-Richtungen bilden also der erste Horizontal-Schlitten 4 mit dem ersten Vertikal-Schlitten 8 und der zweite Horizontal-Schlitten 5 mit dem zweiten Vertikal-Schlitten 9 jeweils einen Kreuz-Schlitten.

An der Unterseite des ersten Vertikal-Schlittens 8 ist eine Spann-Vorrichtung 15 angebracht, mittels derer im Wesentlichen rohrförmige Werkstücke 16, wie zum Beispiel Laufbuchsen für Kolbenmotoren, von außen aufgenommen und eingespannt werden können.

Am zweiten Vertikal-Schlitten 9 ist ein Werkzeugträger 17 angebracht, der als Revolver-Werkzeugträger ausgebildet ist und um eine sich in x-Richtung erstreckende Schwenkachse 18 mittels eines am zweiten Vertikal-Schlittens 9 angebrachten Stellmotors 19 verschwenkbar ist, so dass unterschiedliche Schneid-Werkzeuge 20, 21, 22 gleichzeitig oder nacheinander in eine Eingriffsstellung mit einem zu bearbeitenden Werkstück 16 gebracht werden können.

Am zweiten Vertikal-Schlitten 9 ist weiterhin ein Werkstück-Greifer 23 angebracht, mittels dessen ein fertigbearbeitetes Werkstück 16" an seinem Außenumfang ergriffen werden kann. Der Greifer 23 weist Greifbacken 24 auf, die mittels eines Antriebs 25 betätigbar sind. Die Einheit aus Antrieb 25 und Greifbacken 24 ist mittels eines z-Antriebs 26, der durch einen hydraulisch beaufschlagbaren Kolben-Zylinder-Antrieb gebildet wird, vertikal, also in z-Richtung relativ zum zweiten Vertikal-Schlitten 9 verstellbar.

Am in der Zeichnung linken Ende des Maschinen-Gestells 1 mündet unterhalb der Führungs-Schienen 2, 3 eine Werkstück-Zuführ-Einrichtung 27 in das Maschinen-Gestell 1. Am entgegengesetzten - in der Zeichnung rechten - Ende mündet aus dem Maschinen-Gestell 1 in gleicher Höhe wie die Einrichtung 27 eine Werkstück-Abführ-Einrichtung 28 aus. Durch die Lage der Werkstück-Zuführ-Einrichtung 27 und der Werkstück-Abführ-Einrichtung 28 wird eine Durchlaufrichtung 29 von Werkstücken 16 durch die Vertikal-Drehmaschine definiert.

Unterhalb der Horizontal-Schlitten 4, 5 ist am Maschinen-Gestell 1, benachbart zur Werkstück-Zuführ-Einrichtung 27, eine erste ortsfeste Motor-Spindel-Einrichtung 30 angebracht. Sie weist einen ortsfest am Maschinen-Gestell 1 angebrachten Motor 31 auf, der eine Spindel 32 um eine vertikale, also in z-Richtung verlaufende Drehachse 33 antreiben kann. Am oberen Ende der Spindel 32 ist ein Werkzeughalter 34 angebracht, der ein Schneid-Werkzeug 35 trägt. Das Schneid-Werkzeug 35 ist in der üblichen Weise verstellbar, und zwar mittels eines am unteren Ende der Spindel 32 angeordneten Verstell-Antriebs 36.

Zwischen der ersten Motor-Spindel-Einrichtung 30 und der Werkstück-Abführ-Einrichtung 28 befindet sich eine zweite Motor-Spindel-Einrichtung 37, die ortsfest am Maschinen-Gestell 1 angebracht ist. Sie weist in gleicher Weise wie die erste Motor-Spindel-Einrichtung 30 einen fest am Maschinen-Gestell 1 angebrachten Motor 38 auf, der von einer Spindel 39 durchsetzt wird. Die Spindel 39 wird ebenfalls um eine in z-Richtung verlaufende vertikale Drehachse 40 angetrieben. Am oberen Ende der Spindel 39 ist eine Spann-Vorrichtung 41 angebracht, mittels derer ein Werkstück 16' spannend aufgenommen und gehalten werden kann, dessen Innenkontur bereits fertig bearbeitet ist. Es kann sich hierbei beispielsweise um eine bekannte Hydrodehn-Spann-Vorrichtung handeln. Die Betätigung der Spann-Vorrichtung 41 erfolgt mittels eines Betätigungs-Antriebs 42, der am unteren Ende der Spindel 39 angeordnet ist.

Zwischen der ersten Motor-Spindel-Einrichtung 30 und der zweiten Motor-Spindel-Einrichtung 37 ist am Maschinen-Gestell 1 eine weitere Werkzeug-Einheit 43 angebracht. Sie weist einen Kreuz-Schlitten 44 auf, dessen x-Schlitten 45 auf am Maschinen-Gestell 1 angebrachten Führungs-Schienen 46 verschiebbar gelagert ist. Der Antrieb erfolgt mittels eines x-Motors 47 über einen x-Spindel-Trieb 48. Auf dem x-Schlitten 45 ist ein z-Schlitten 49 auf Führungs-Schienen 50 verschiebbar geführt. Der Antrieb erfolgt mittels eines am x-Schlitten 45 angebrachten z-Motors 51 über einen z-Spindel-Trieb 52. An der Oberseite des z-Schlittens 49 ist ein Werkzeug-Träger 53 angeordnet, der als Revolver-Werkzeugträger ausgebildet ist und um eine vertikale, sich also in z-Richtung erstreckende, Schwenkachse 54 mittels eines Stellmotors 55 verschwenkbar ist. Der Werkzeugträger 53 kann mehrere Schneid-Werkzeuge 56 tragen, die wahlweise zum Eingriff an der Außenseite eines zu bearbeitenden Werkstücks 16' kommen.

Zwischen den Motor-Spindel-Einrichtungen 30, 37 und unterhalb der Horizontal-Schlitten 4, 5 ist am Maschinen-Gestell 1 eine Messeinrichtung 57 angebracht, mittels derer die Innenkontur eines Werkstücks 16 vermessen werden kann.

### Die geschilderte Vertikal-Drehmaschine arbeitet wie folgt:

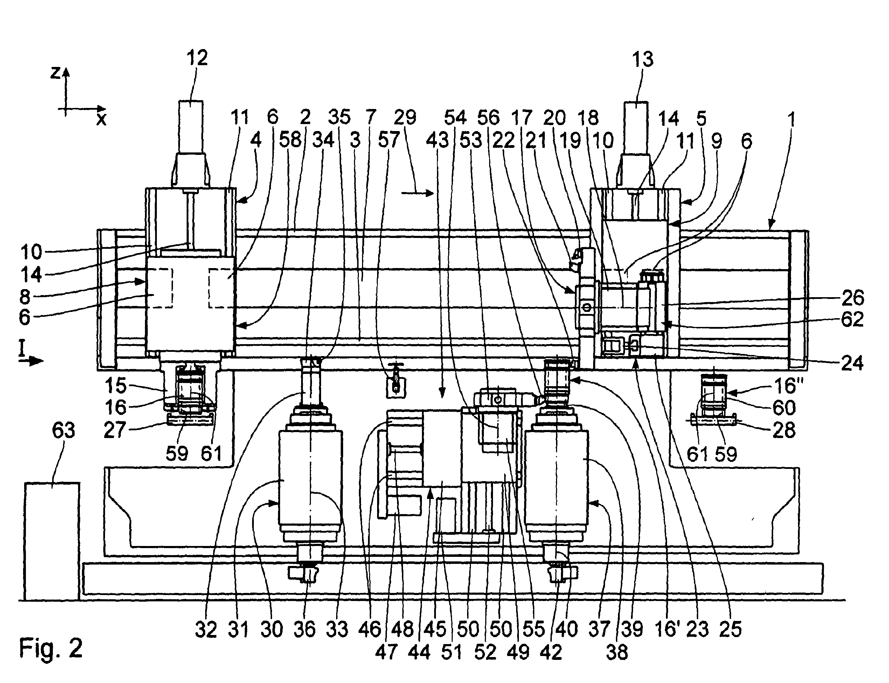

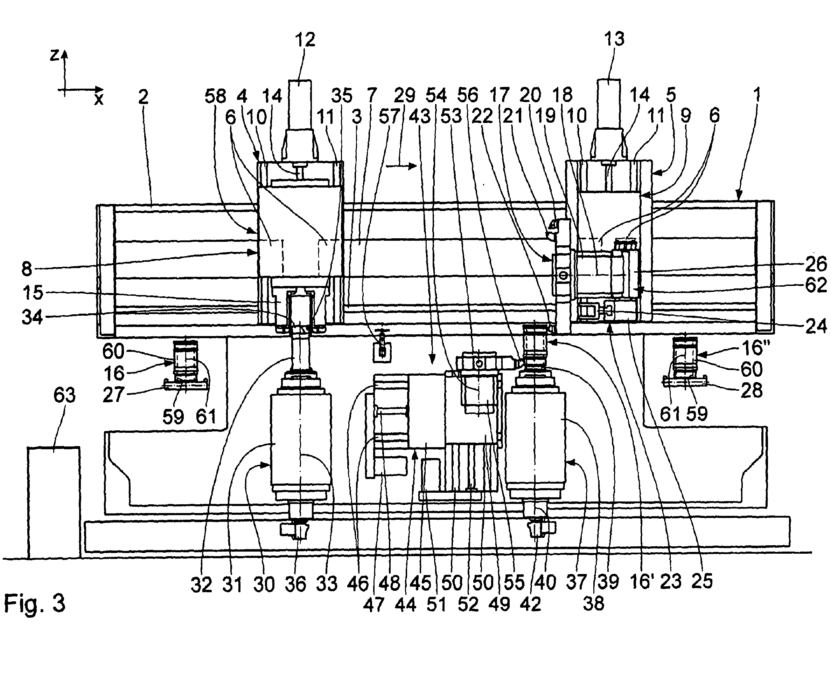

Zu bearbeitende Werkstücke 16, die roh vorbearbeitet sind, werden zur End-Bearbeitung der Vertikal-Drehmaschine mittels der Werkstück-Zuführ-Einrichtung 27 zugeführt. Ein solches Werkstück 16 wird gemäß Fig. 2 mittels der durch den ersten Horizontal-Schlitten 4, den ersten Vertikal-Schlitten 8 und die Spann-Vorrichtung 15 gebildeten Spann- und Übergabe-Einrichtung 58 aufgenommen. Der erste Vertikal-Schlitten 8 wird nach oben verfahren. Der erste Horizontal-Schlitten 4 wird in Durchlauf-Richtungen 29 verfahren, bis sich das in der Spann-Vorrichtung 15 befindende Werkstück 16 über der ersten Motor-Spindel-Einrichtung 30 befindet. Dann wird der erste Vertikal-Schlitten 1 in z-Richtung nach unten verfahren. Die Spindel 32 der ersten Motor-Spindel-Einrichtung 30 wird drehangetrieben. Bei der Relativbewegung von Werkstück 16 und Schneid-Werkzeug 35 in z-Richtung gegeneinander wird gemäß Fig. 3 die Innenfläche 59 des Werkstücks 16 auf ihr exaktes Maß gedreht. Das Werkstück 16 ist hierbei in der Spann-Vorrichtung 15 nur an seiner Außenfläche 60 festgehalten, wird also nicht um seine Mittelachse 61 gedreht. Während dieses Bearbeitungsvorgangs wird nur das Werkstück 16 in z-Richtung bewegt; das Schneid-Werkzeug 35 verändert seinen Höhenlage, also seine Lage in z-Richtung, nicht; es wird nur drehangetrieben.

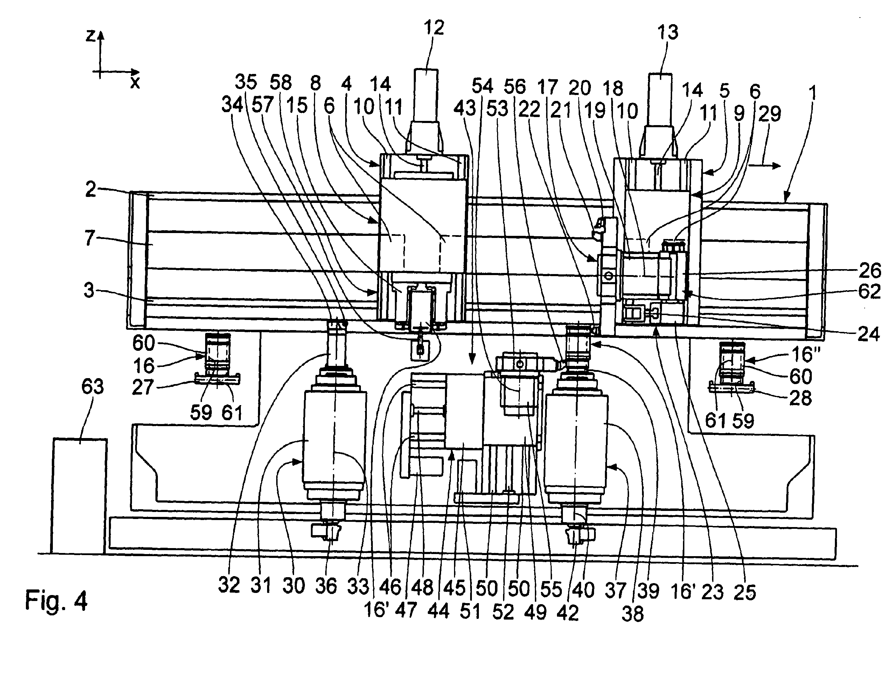

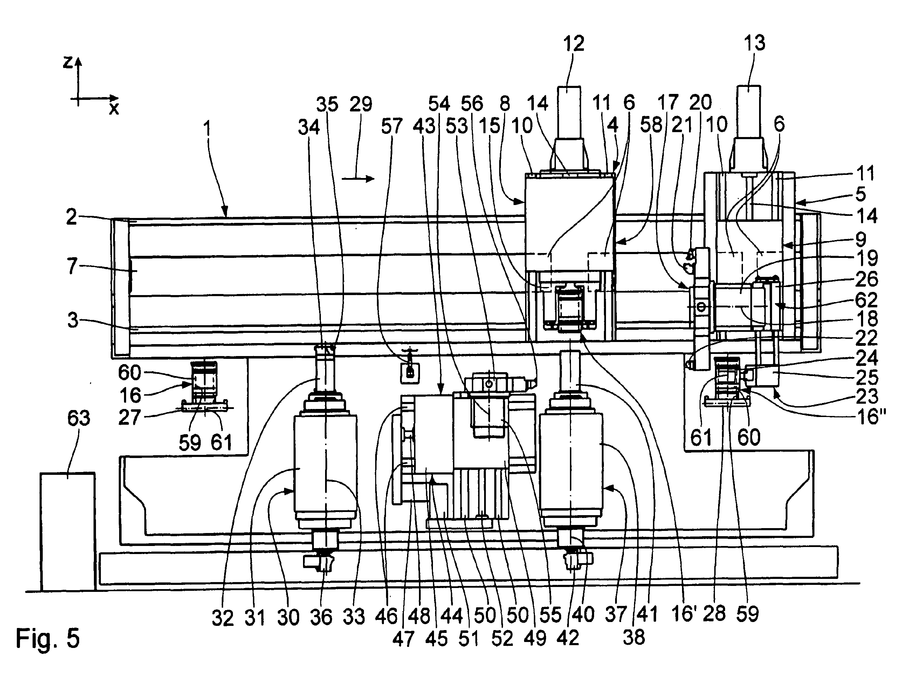

Nach diesem ersten Bearbeitungsschritt wird der erste Vertikal-Schlitten 8 bei nach wie vor stillstehendem Horizontal-Schlitten 4 in z-Richtung nach oben verfahren, bis das teil-end-bearbeitete Werkstück 16' oberhalb des Werkzeug-Halters 34 angelangt ist. Anschließend wird der erste Horizontal-Schlitten 4 nach rechts über die Mess-Einrichtung 57 verfahren. Dann wird gemäß Figur 4 der erste Vertikal-Schlitten 8 wieder nach unten verfahren, so dass die Mess-Einrichtung 57 in das Werkstück 16' eintaucht und über dessen Höhe dessen Innenfläche 59 vermisst. Wenn der Innendurchmesser noch zu klein ist, erfolgt eine erneute Bearbeitung auf der ersten Motor-Spindel-Einrichtung 30. Wenn der Durchmesser der Innenfläche 59 zu groß ist, kann Ausschuss vorliegen. Wenn die Bearbeitung der Innenfläche 59 innerhalb des vorgegebenen Toleranzmaßes, von beispielsweise ± 0,01 mm, liegt, erfolgt der Weitertransport des teil-end-bearbeiteten Werkstücks 16' in die in Figur 5 dargestellte Position über der zweiten Motor-Spindel-Einrichtung 37. Das Werkstück 16' wird gemäß Figur 5 auf die Spann-Vorrichtung 41 abgesetzt und eingespannt. Die Spann-Vorrichtung 15 der Spann- und Übergabe-Einrichtung 58 wird geöffnet und der erste Vertikal-Schlitten 8 nach oben verfahren. Anschließend wird die Spann- und Übergabe-Einrichtung 58 entgegen der Durchlauf-Richtung 29 wieder in ihre Ausgangs-Position über der Werkstück-Zuführ-Einrichtung 27 verfahren, von wo aus der geschilderte Durchlauf wiederholt wird.

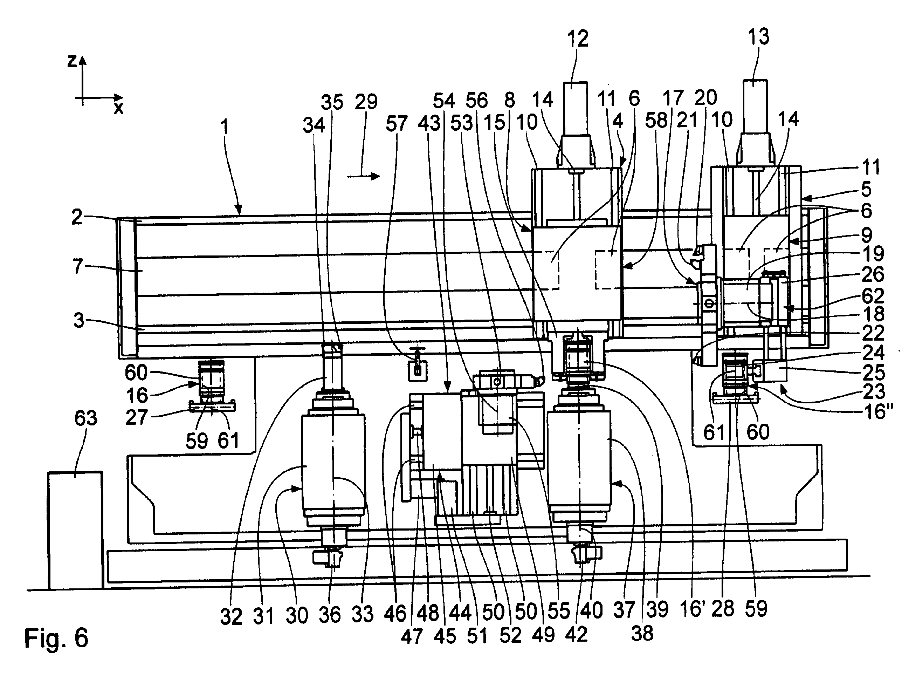

Wie Figur 2 entnehmbar ist, erfolgt während der Aufnahme eines lediglich roh vorbearbeiteten Werkstücks 16 durch die Spann- und Übergabe-Einrichtung 58 von der Werkstück-Zuführ-Einrichtung 27 die End-Bearbeitung eines Werkstücks 16' auf der zweiten Motor-Spindel-Einrichtung 37. Die Bearbeitung der Außenfläche 60 erfolgt hierbei zum einen durch die Schneid-Werkzeuge 20, 21, 22, die an der Bearbeitungs- und Ausgabe-Einrichtung 62 angebracht sind, die durch den zweiten Horizontal-Schlitten 5, den zweiten Vertikal-Schlitten 9 und den WerkzeugTräger 17 gebildet sind. Zum anderen erfolgt von unten her eine Bearbeitung der Außenfläche 60 des Werkstücks 16' mittels des Werkzeugs 56. Die gleichzeitige Bearbeitung der Außenfläche 60 des Werkstücks 16' mittels zweier oder mehrerer Schneid-Werkzeuge 20, 21, 22, 56' erfolgt aus Gründen der Taktzeit, weil - speziell bei Zylinder-Laufbuchsen als Werkstücke 16' - die Außen-Bearbeitung einen höheren Zeitaufwand erfordert als die Innenbearbeitung. Wenn dies nicht der Fall ist, ist die weitere Werkzeug-Einheit 43 nicht erforderlich. Das innen und außen end-bearbeitete Werkstück 16" wird gemäß Figur 5 mittels der Bearbeitungs- und Ausgabe-Einrichtung 62 von der Spann-Vorrichtung 41 heruntergenommen, und zwar mittels des Werkstück-Greifers 23. Durch entsprechendes Verfahren der Bearbeitungs- und Ausgabe-Einrichtung 62 über die Werkstück-Abführ-Einrichtung 28 wird das fertig bearbeitete Werkstück 16" zur Werkstück-Abführ-Einrichtung 28 gebracht, wie den Figuren 5 und 6 entnehmbar ist. Während dieser Abführung des fertig bearbeiteten Werkstücks 16" wird - wie bereits geschildert - ein teil-end-bearbeitetes Werkstück 16' über die zweite Motor-Spindel-Einrichtung 37 verfahren.

Die Steuerung der Abläufe erfolgt über eine zentrale Steuer-Einheit 63, die lediglich angedeutet ist.

## Patentansprüche

1. Verfahren zur spanenden Innen-Bearbeitung und Außen-Bearbeitung eines im Wesentlichen rohrförmigen, eine Außenfläche (60), eine Innenfläche (59) und eine Mittelachse (61) aufweisenden Werkstücks (16) mit folgenden Arbeitsschritten:
- ein zu bearbeitendes Werkstück (16) wird zugeführt,
- das Werkstück (16) wird undrehbar und in Richtung seiner Mittelachse (61) verschiebbar gehalten,
- das Werkstück (16) wird in Richtung seiner Mittelachse (61) über ein drehend angetriebenes Schneid-Werkzeug (35) unter spanender Bearbeitung seiner Innenfläche (59) verschoben,
- das an seiner Innenfläche (59) spanend bearbeitete Werkstück (16') wird an seiner bearbeiteten Innenfläche (59) gespannt und in Richtung seiner Mittelachse (61) unverschiebbar gehalten,
- das Werkstück (16') wird mittels mindestens eines in Richtung der Mittelachse (61) verschiebbaren Schneid-Werkzeugs (20, 21, 22) an seiner Außenfläche (60) spanend bearbeitet,
- das bearbeitete Werkstück (16") wird abgeführt.

2. Verfahren nach Anspruch 1, **dadurch gekennzeichnet,**
**dass** nach der spanenden Bearbeitung der Innenfläche (59) des Werkstücks (16') die bearbeitete Innenfläche (59) vermessen wird.

3. Verfahren nach Anspruch 1 und 2, **dadurch gekennzeichnet,**
**dass** die Bearbeitung der Innenfläche (59) eine End-Bearbeitung ist.

4. Verfahren nach einem der Ansprüche 1 bis 3, **dadurch gekennzeichnet,**
**dass** die Bearbeitung der Außenfläche (60) eine End-Bearbeitung ist.

5. Vertikal-Drehmaschine zur Ausführung des Verfahrens nach einem der Ansprüche 1 bis 4,
- mit einem Maschinen-Gestell (1),
- mit einer am Maschinen-Gestell (1) in einer horizontalen x-Richtung verschiebbar geführten Spann- und Übergabe-Einrichtung (58),
-- die eine vertikal in einer z-Richtung verschiebbare Spann-Vorrichtung (15) zur undrehbaren Aufnahme eines zu bearbeitenden rohrförmigen Werkstücks (16) an seiner Außenfläche (60) aufweist,
- mit einer unterhalb des Verschiebewegs der Spann- und Übergabe-Einrichtung (58) ortsfest am Maschinen-Gestell (1) angebrachten ersten Motor-Spindel-Einrichtung (30),
-- die einen drehantreibbaren in z-Richtung verschiebbaren Werkzeug-Halter (34) für ein Schneid-Werkzeug (35) trägt,
- mit einer am Maschinen-Gestell (1) in x-Richtung verschiebbar geführten Bearbeitungs- und Ausgabe-Einrichtung (62),
-- die einen in z-Richtung verschiebbaren ersten Werkzeugträger (17) für mindestens ein Schneid-Werkzeug (20, 21, 22) aufweist und
- mit einer unterhalb des Verschiebewegs der Spann- und Übergabe-Einrichtung (61) und des Verschiebewegs der Bearbeitungs- und Ausgabe-Einrichtung (62) ortsfest am Maschinen-Gestell (1) angebrachten zweiten Motor-Spindel-Einrichtung (37),
-- die eine drehantreibbare und in z-Richtung unverschiebbare Spann-Vorrichtung (41) zur spannenden Halterung des Werkstücks (16') an seiner Innenfläche (59) aufweist.

6. Vertikal-Drehmaschine nach Anspruch 5, **dadurch gekennzeichnet, dass** zwischen der ersten Motor-Spindel-Einrichtung (30) und zweiten Motor-Spindel-Einrichtung (37) eine Mess-Einrichtung (57) zum Messen der bearbeitenden Innenfläche (59) des Werkstücks (16') am Maschinen-Gestell (1) angebracht ist.

7. Vertikal-Drehmaschine nach Anspruch 5 oder 6, **dadurch gekennzeichnet,**
**dass** an der Bearbeitungs- und Ausgabe-Einrichtung (62) ein gegenüber der Bearbeitungs- und Ausgabe-Einrichtung (62) in z-Richtung verschiebbarer Werkstück-Greifer (23) angeordnet ist.

8. Vertikal-Drehmaschine nach einem der Ansprüche 5 bis 7, **dadurch gekennzeichnet,**
**dass** die Spann- und Übergabe-Einrichtung (58) einen durch einen ersten Horizontal-Schlitten (4) und einen hierauf angeordneten ersten Vertikal-Schlitten (8) gebildeten Kreuzschlitten aufweist, an dem die Spann-Vorrichtung (15) angebracht ist.

9. Vertikal-Drehmaschine nach einem der Ansprüche 5 bis 8, **dadurch gekennzeichnet,**
**dass** die Bearbeitungs- und Ausgabe-Einrichtung (62) einen durch einen zweiten Horizontal-Schlitten (5) und einen hierauf angeordneten zweiten Vertikal-Schlitten (9) gebildeten Kreuzschlitten aufweist, an dem der Werkzeugträger (17) angeordnet ist.

10. Vertikal-Drehmaschine nach Anspruch 8 und 9, **dadurch gekennzeichnet,**
**dass** der erste Horizontal-Schlitten (4) und der zweite Horizontal-Schlitten (5) auf gemeinsamen Führungs-Schienen (2, 3) in x-Richtung verschiebbar geführt sind.

11. Vertikal-Drehmaschine nach Anspruch 10, **dadurch gekennzeichnet, dass** der erste Horizontal-Schlitten (4) und der zweite Horizontal-Schlitten (5) mittels Linear-Motoren in x-Richtung antreibbar sind.

12. Vertikal-Drehmaschine nach Anspruch 11, **dadurch gekennzeichnet, dass** der Linear-Motor des ersten Horizontal-Schlittens (4) und der Linear-Motor des zweiten Horizontal-Schlittens (5) einen gemeinsamen am Maschinen-Gestell (1) angebrachten Sekundärteil (7) aufweisen.

13. Vertikal-Drehmaschine nach einem der Ansprüche 5 bis 12, **dadurch gekennzeichnet,**
**dass** benachbart zur zweiten Motor-Spindel-Einrichtung (37) eine weitere Werkzeug-Einheit (43) mit einem in x-Richtung und z-Richtung verfahrbaren Werkzeugträger (53) zur Aufnahme eines Schneid-Werkzeugs (56) zur Bearbeitung der Außenfläche (60) des Werkstücks (16") vorgesehen ist.

14. Vertikal-Drehmaschine nach Anspruch 13, **dadurch gekennzeichnet, dass** der zweite Werkzeugträger (53) auf einem Kreuzschlitten (44) angeordnet ist.

## Claims

1. Method for machining the inside and outside of a substantially tubular workpiece (16) having an outer surface (60), an inner surface (59) and a centre line (61), comprising the following working steps:
- a workpiece (16) to be machined is supplied,
- the workpiece (16) is held so that it may not rotate and may be moved in the direction of its centre line (61),
- the workpiece (16) is moved in the direction of its centre line (61) via a rotatingly driven cutting tool (35) while its inner surface (59) is machined,
- the workpiece (16') machined on its inner surface (59) is clamped by its machined inner surface (59) and held so that it may not move in the direction of its centre line (61),
- the outer surface (60) of the workpiece (16') is machined by at least one cutting tool (20, 21, 22) which may be moved in the direction of the centre line (61),
- the machined workpiece (16") is removed.

2. Method according to claim 1, **characterised in that** the machined inner surface (59) of the workpiece (16') is gauged following machining thereof.

3. Method according to claims 1 and 2, **characterised in that** the machining of the inner surface (59) is a finishing machining.

4. Method according to any one of claims 1 to 3, **characterised in that** the machining of the outer surface (60) is a finishing machining.

5. Vertically operated lathe for carrying out the method according to any one of claims 1 to 4,
- with a machine mount (1),
- with a clamping and transfer means (58) which is guided displaceably in a horizontal x direction on the machine mount (1)
-- which has a clamping device (15) which may be moved vertically in a z direction for receiving, without rotating, the outer surface (60) of a tubular workpiece (16) to be machined,
- with a first motor spindle means (30) which is in a stationary position on the machine mount (1) below the displacement path of the clamping and transfer means (58)
-- which supports a rotationally driveable tool holder (34), displaceable in the z direction, for a cutting tool (35),
- with a machining and discharge means (62) which is guided displaceably in the x direction on the machine mount (1)
-- which has a first tool carrier (17), displaceable in the z-direction, for at least one cutting tool (20, 21, 22) and
- with a second motor spindle means (37) which is in a stationary position on the machine mount (1) below the displacement path of the clamping and transfer means (61) and below the displacement path of the machining and discharge means (62),
-- which has a rotationally driveable clamping device (41), undisplaceable in the z direction, for clamping the inner surface (59) of the workpiece (16').

6. Vertically operated lathe according to claim 5, **characterised in that** a measuring means (57) for measuring the inner surface (59) being machined of the workpiece (16') is positioned on the machine mount (1) between the first motor spindle means (30) and the second motor spindle means (37).

7. Vertically operated lathe according to claim 5 or 6, **characterised in that** a workpiece gripper (23) which may be displaced in the z direction with respect to the machining and discharge means (62) is positioned on the machining and discharge means (62).

8. Vertically operated lathe according to any one of claims 5 to 7, **characterised in that** the clamping and transfer means (58) has a cross slide which is formed by a first horizontal slide (4) and a first vertical slide (8) positioned thereon and on which the clamping device (15) is positioned.

9. Vertically operated lathe according to any one of claims 5 to 8, **characterised in that** the machining and discharge means (62) has a cross slide which is formed by a second horizontal slide (5) and a second vertical slide (9) positioned thereon and on which the tool carrier (17) is positioned.

10. Vertically operated lathe according to claims 8 and 9, **characterised in that** the first horizontal slide (4) and the second horizontal slide (5) are displaceably guided in the x direction on common guide rails (2, 3).

11. Vertically operated lathe according to claim 10, **characterised in that** the first horizontal slide (4) and the second horizontal slide (5) are driven in the x direction by linear motors.

12. Vertically operated lathe according to claim 11, **characterised in that** the linear motor of the first horizontal slide (4) and the linear motor of the second horizontal slide (5) have a common secondary part (7) positioned on the machine mount (1).

13. Vertically operated lathe according to any one of claims 5 to 12, **characterised in that** another tool unit (43) is provided adjacent to the second motor spindle means (37) with a tool carrier (53) which may be moved in the x direction and z direction and is to receive a cutting tool (56) for machining the outer surface (60) of the workpiece (16").

14. Vertically operated lathe according to claim 13, **characterised in that** the second tool carrier (53) is positioned on a cross slide (44).

## Revendications

1. Procédé pour l'usinage intérieur et l'usinage extérieur par enlèvement de copeaux d'une pièce (16) sensiblement tubulaire dotée d'une surface extérieure (60), d'une surface intérieure (59) et d'un axe médian (61), comprenant les étapes de travail suivantes :
- une pièce à usiner (16) est amenée,
- la pièce (16) est maintenue de manière non rotative et mobile en direction de son axe médian (61),
- la pièce (16) est déplacée en direction de son axe médian (61) au-dessus d'un outil de coupe (35) entraîné en rotation pour l'usinage par enlèvement de copeaux de sa surface intérieure (59),
- la pièce (16') usinée par enlèvement de copeaux sur sa surface intérieure (59) est serrée sur sa surface inférieure (59) usinée et maintenue immobile en direction de son axe médian (61),
- la pièce (16') est usinée par copeaux sur sa surface extérieure (60) au moyen d'un outil de coupe (20, 21, 22) mobile en direction de l'axe médian (61),
- la pièce (16') usinée est évacuée.

2. Procédé selon la revendication 1, **caractérisé en ce que** la surface intérieure (59) usinée est mesurée après l'usinage par enlèvement de copeaux de la surface inférieure (59) de la pièce (16').

3. Procédé selon la revendication 1 et 2, **caractérisé en ce que** l'usinage de la surface intérieure (59) est une finition.

4. Procédé selon l'une quelconque des revendications 1 à 3, **caractérisé en ce que** l'usinage de la surface extérieure (60) est une finition.

5. Tour vertical destiné à exécuter le procédé selon l'une quelconque des revendications 1 à 4,
- comprenant un bâti de machine (1),
- comprenant un système de serrage et transfert (58) guidé de manière à pouvoir être déplacé dans une direction x horizontale sur le bâti de machine (1),
- qui comprend un dispositif de serrage (15) mobile verticalement dans une direction z destiné à recevoir de manière non rotative une pièce (16) tubulaire à usiner sur sa surface extérieure (60),
- comprenant un premier système de moteur et broche (30) monté fixe sur le bâti de machine (1) au-dessous du trajet de déplacement du système de serrage et de transfert (58),
- qui supporte un porte-outil (34), mobile dans la direction z et pouvant être entraîné en rotation, pour un outil de coupe (35),
- comprenant un système d'usinage et de distribution (62) guidé de manière mobile dans la direction x sur le bâti de machine (1),
- qui comprend un premier porte-outil (17) mobile dans la direction z pour au moins un outil de coupe (20, 21, 22),
et
- comprenant un second système de moteur et broche (37) monté fixe sur le bâti de machine (1) au-dessous du trajet de déplacement du système de serrage et de transfert (61) et du trajet de déplacement du système d'usinage et de distribution (62),
- qui comprend un dispositif de serrage (41) pouvant être entraîné en rotation et immobile dans la direction z destiné à maintenir par serrage la pièce (16') sur sa surface intérieure (59).

6. Tour vertical selon la revendication 5, **caractérisé en ce qu'**un système de mesure (57) destiné à mesurer la surface intérieure (59) à usiner de la pièce (16') est aménagé sur le bâti de machine (1) entre le premier système de moteur et broche (30) et le second système de moteur et broche (37).

7. Tour vertical selon la revendication 5 ou 6, **caractérisé en ce qu'**un prise-pièce (23) mobile dans la direction z par rapport au système d'usinage et de distribution (62) est disposé sur le système d'usinage et de distribution (62).

8. Tour vertical selon l'une quelconque des revendications 5 à 7, **caractérisé en ce que** le système de serrage et de transfert (58) comprend un premier chariot à mouvements croisés, formé par un premier chariot horizontal (4) et un premier chariot vertical (8) disposé dessus, sur lequel est aménagé le dispositif de serrage (15).

9. Tour vertical selon l'une quelconque des revendications 5 à 8, **caractérisé en ce que** le système d'usinage et de distribution (62) comprend un chariot à mouvements croisés, formé par un second chariot horizontal (5) et un second chariot vertical (9) disposé dessus, sur lequel est disposé le porte-outil

10. Tour vertical selon les revendications 8 et 9, **caractérisé en ce que** le premier chariot horizontal (4) et le second chariot vertical (5) sont guidés de manière à pouvoir se déplacer dans la direction x sur des rails de guidage (2, 3) communs.

11. Tour vertical selon la revendication 10, **caractérisé en ce que** le premier chariot horizontal (4) et le second chariot horizontal (5) peuvent être entraînés dans la direction x au moyen de moteurs linéaires.

12. Tour vertical selon la revendication 11, **caractérisé en ce que** le moteur linéaire du premier chariot horizontal (4) et le moteur linéaire du second chariot horizontal (5) comprennent un rotor (7) commun aménagé sur le bâti de machine (1) commun.

13. Tour vertical selon l'une des revendications 5 à 12, **caractérisé en ce qu'**une autre unité d'outil (43) dotée d'un porte-outil (53) mobile dans la direction x et dans la direction z destiné à recevoir un outil de coupe (56) pour usiner la surface extérieure (60) de la pièce (16") est prévue au voisinage du second système de moteur et broche (37).

14. Tour vertical selon la revendication 13, **caractérisé en ce que** le second porte-outil (53) est disposé sur un chariot à mouvements croisés (44).
